# EUROPÄISCHE PATENTSCHRIFT

(11) **EP 2 199 607 B1**
(45) Veröffentlichungstag und Bekanntmachung des Hinweises auf die Patenterteilung: **25.09.2013**
(21) Anmeldenummer: 09179029.5
(22) Anmeldetag: 14.12.2009
(51) Int. Cl.: F03D 11/00, F03D 11/02, F16H 1/28

(54) **Planetengetriebe für eine Windkraftanlage**
Planetary gear for a wind power system
Train épicycloïdal pour une éolienne

(30) Priorität: 19.12.2008 DE 102008063868
(43) Veröffentlichungstag der Anmeldung: 23.06.2010
(73) Patentinhaber: Siemens Aktiengesellschaft, 80333 München (DE)
(72) Erfinder: Dinter, Ralf Martin, 45888 Gelsenkirchen (DE); Möllers, Manfred, 46399 Bocholt (DE); Scheibe, Herbert, 46397 Bocholt (DE)
(74) Vertreter: Maier, Daniel Oliver

(56) Entgegenhaltungen:
- EP-A1- 1 703 174
- EP-A2- 1 184 567
- WO-A1-01/44695
- DE-A1- 10 260 132

## Beschreibung

Die Erfindung betrifft ein Planetengetriebe mit einer in einem Gehäuse umlaufenden Planetenstufe für eine mit einem Rotor versehene Windkraftanlage mit den Merkmalen des Oberbegriffes des Patentanspruches 1.

Ein derartiges Planetengetriebe ist aus der DE 102 60 132 A1 bekannt. Bei dem bekannten Planetengetriebe sind die Achsen der Planetenräder mit Ölführungskanälen versehen, die an den Öldurchlauf durch das Getriebe angeschlossen sind. Dadurch wird in den Planetenradlagern eine Durchströmungsrichtung des Schmieröls mit einer Zwangsführung erreicht. Durch eine solche Zwangsführung bekommen alle Rollenreihen auch von mehrreihigen Lagern genügend Schmieröl zur Schmierung zugeführt. Das die Lager durchströmende Schmieröl spült auch eventuell vorhandene Abriebpartikel aufgrund des Lagerverschleißes und der Reibung bei den Zahneingriffen aus den Lagern fort. Es entsteht somit ein für Windkraftanlagen hervorragend geeignetes Planetengetriebe, das sich durch eine zwangsgeführte Schmierung der Planetenradlagerung und damit durch eine lange Betriebsdauer auszeichnet.

Das aus der DE 102 60 132 A1 bekannte Planetengetriebe ist mit einer Planetenstufe ausgeführt. In vielen Fällen reicht eine Planetenstufe für die Übertragung des Drehmomentes nicht aus, so dass eine zweite Planentenstufe in das Planetengetriebe zu integrieren ist. Eine solche zweite Planetenstufe ist sinnvollerweise ebenfalls mit einer Zwangsführung des Schmieröls zu den Planetenradlagern zu versehen. Hierzu wurde bisher für die zweite Planetenstufe eine eigene Einsatzvorrichtung für die Einleitung des Schmieröls verwendet. Ein solches Planetengetriebe ist verhältnismäßig aufwendig ausgebildet.

Der Erfindung liegt die Aufgabe zugrunde, das gattungsgemäße Planetengetriebe zweistufig auszubilden und dabei beide Planetenstufen in die Zwangsführung eines Schmieröls mit geringem technischen Aufwand einzubeziehen.

Die Aufgabe wird bei einem gattungsgemäßen Planetengetriebe erfindungsgemäß durch die kennzeichnenden Merkmale des Patentanspruches 1 gelöst. Vorteilhafte Ausgestaltungen der Erfindung sind Gegenstand der Unteransprüche.

Bei dem erfindungsgemäßen zweistufigen Planetengetriebe wird nur eine einzige aus Stator mit Buchse bestehende Einsatzvorrichtung verwendet, über die die Planetenradlager beider Planetenstufen gleichzeitig und parallel mit Schmieröl versorgt werden. Da die Zuführung des Schmieröls mittels einer Ölpumpe durchgehend zwangsweise erfolgt, sind die Planetenradlager auch bei geringen Drehzahlen des Planetengetriebes konstant und ausreichend mit Schmieröl versorgt. Die Planetenträger und die Planetenräder können mit unterschiedlichen Drehzahlen umlaufen.

Ein Ausführungsbeispiel der Erfindung ist in der Zeichnung dargestellt und wird im Folgenden näher erläutert. Es zeigen:

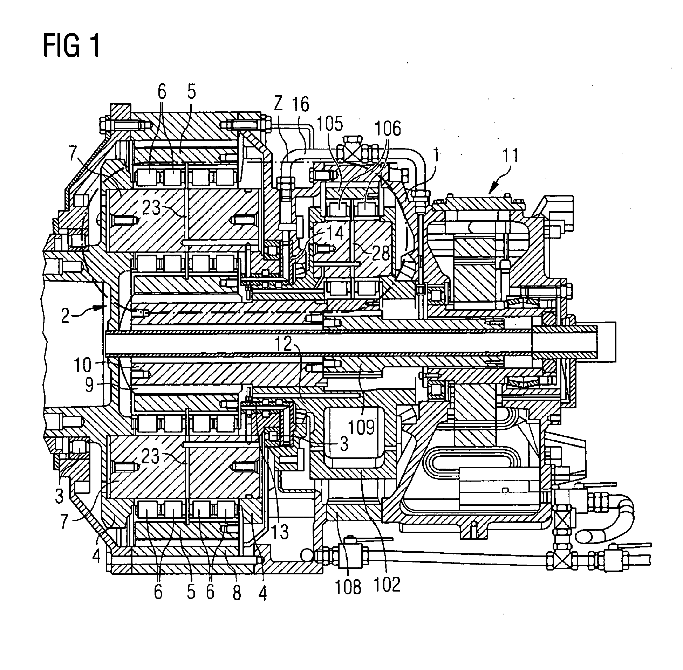

Fig. 1 ausschnittsweise einen Längsschnitt durch ein zweistufiges Planetengetriebe und

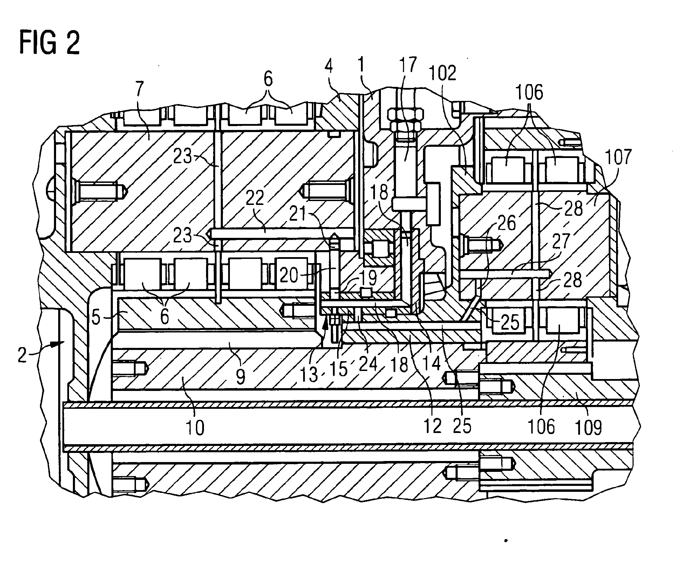

Fig. 2 die Einzelheit Z nach Fig. 1.

Das dargestellte Planetengetriebe ist auf dem Turm einer nicht gezeigten Windkraftanlage angeordnet und dient zum Antrieb eines Generators durch einen Flügel tragenden Rotor.

Das Getriebe ist in einem Getriebegehäuse 1 untergebracht und umfasst eine erste Planetenstufe, die von dem Rotor angetrieben wird. Die erste Planetenstufe des Getriebes umfasst einen Planetenträger 2, der mit der Rotorwelle des nicht gezeigten Rotors verbunden ist. Der Planetenträger 2 ist in dem Getriebegehäuse 1 in Lagern 3 drehbar gelagert und besteht aus zwei parallelen Seitenwangen 4, die durch nicht gezeigte Stege miteinander verbunden sind.

In dem Planetenträger 2 sind mehrere Planetenräder 5 drehbar in Planetenradlagern 6 gelagert. Die Planetenradlager 6, die entweder als einreihige oder als zweireihige Wälzlager ausgebildet und in dem Planetenrad 5 angeordnet sind, stützen sich über eine Planetenachse 7 auf dem Planetenträger 2 ab. Die Planetenräder 5 stehen einerseits mit einem fest am Getriebegehäuse 1 angeordneten Hohlrad 8 und anderseits mit einem als zentrales Sonnenrad dienenden, auf einer Sonnenradwelle 10 angebrachten Zahnkranz 9 in Eingriff. Die Sonnenradwelle 10 treibt mittels einer zweiten Planetenstufe und einer Stirnradgetriebestufe 11 den Generator der Windkraftanlage an.

Die zweite Planetenstufe besteht aus einer zweiten Sonnenradwelle 109, die mit mehreren zweiten Planetenrädern 105 in Eingriff steht, die ihrerseits in ein fest an dem Getriebegehäuse 1 angeordnetes zweites Hohlrad 108 eingreifen. Die zweiten Planetenräder 105 sind über zweite Planetenradlager 106 in einem zweiten Planetenträger 102 gelagert und stützen sich jeweils über eine zweite Planetenachse 107 in dem zweiten Planetenträger 102 ab. Der zweite Planetenträger 102 weist einen hohlzylindrischen Endabschnitt 12 auf, der die Sonnenradwelle 10 umschließt und von dem Planetenträger 2 der ersten Planetenstufe umgeben ist.

In dem Getriebegehäuse 1 ist eine Einsatzvorrichtung bestehend aus einem Stator 14 mit einer Buchse 15 fest eingesetzt. Der Stator 14 mit Buchse 15 ist L-förmig ausgebildet und weist einen radialen Schenkel, den Stator 14, und einen axialen Schenkel, die Buchse 15 aus einem Edelmetall wie Bronze auf. Die axiale Buchse 15 liegt radial zwischen dem Planetenträger 2 der ersten Planetenstufe und dem hohlzylindrischen Endabschnitt 12 des Planetenträgers 102 der zweiten Planetenstufe. Zwischen der Buchse 15 und dem Planetenträger 2 der ersten Planetenstufe sowie zwischen der Buchse 15 und dem hohlzylindrischen Endabschnitt 12 des Planetenträgers 102 der zweiten Planetenstufe ist jeweils ein radialer Spalt von definierter geringer Spaltbreite und definierter Spaltlänge eingehalten. Die Spalten stellen sicher, dass die Buchse 15 keine Lagerfunktion für die Planetenträger 2, 102 übernehmen kann.

An das Getriebegehäuse 1 ist über eine außen verlegte Ölleitung 16 eine Ölförderpumpe angeschlossen, die aus dem in dem Getriebegehäuse 1 befindlichen Ölsumpf Schmieröl ansaugt und das Schmieröl unter Druck nach einer Filtration und gegebenenfalls einer Kühlung in das Getriebegehäuse 1 zurückfördert. Die Ölleitung 16 ist an einem Ölzulauf 17 angeschlossen, der als Bohrung koaxial zu dem radialen Stator 14 durch das Getriebegehäuse 1 hindurchgeführt ist.

Der Ölzulauf 17 steht mit einem ersten Ölführungskanal 18 in Verbindung, der als Bohrung durch den radialen Stator 14 und die axiale Buchse 15 hindurchgeführt ist. Der erste Ölführungskanal 18 endet in einer ersten Ringnut 19, die an der Grenzfläche zwischen der axialen Buchse 15 und einer radialen Stirnfläche der einen Seitenwange 4 des Planetenträgers 2 in diese Seitenwange 4 eingeschnitten ist.

Die erste Ringnut 19 steht mit zweiten Ölführungskanälen 20 in Verbindung, die durch die eine Seitenwange 4 des Planetenträgers 2 bis zu den Achsen 7 der Planetenräder 5 hindurchgeführt sind. Die Anzahl der zweiten Ölführungskanäle 20 des Planetenträgers 2 entspricht der Anzahl der Planetenräder 5. Jeder der zweiten Ölführungskanäle 20 des Planetenträgers 2 setzt sich in eine dritte Ringnut 21 fort, die in eine jede der Achsen 7 der Planetenräder 5 eingeschnitten ist. Die dritte Ringnut 21 der Achse 7 steht mit axialen dritten Ölführungskanälen 22 in Verbindung, die durch die Achse 7 hindurchgeführt sind. Die axialen dritten Ölführungskanäle 22 münden in radialen vierten Ölführungskanälen 23, die offen zwischen den beiden zweireihigen Planetenradlagern 6 enden.

An den Grenzflächen zwischen der Buchse 15 und dem hohlzylindrischen Endabschnitt 12 des zweiten Planetenträgers 102 ist in die Buchse 15 eine zweite Ringnut 24 eingeschnitten, die eine Verbindung zu dem ersten Ölführungskanal 18 hat. Vorzugsweise setzt sich die zweite Ringnut 24 in eine Ringnut fort, die in den hohlzylindrischen Endabschnitt 12 des zweiten Planetenträgers 102 eingeschnitten ist. Die zweite Ringnut 24 steht mit fünften Ölführungskanälen 25 in Verbindung, die jeweils aus einem axialen Abschnitt und einem schräg verlaufenden Abschnitt bestehen und durch den zweiten Planetenträger 102 hindurchgeführt sind. Die Anzahl der fünften Ölführungskanäle 25 des zweiten Planetenträgers 102 entspricht der Anzahl der zweiten Planetenräder 105. Jeder fünfte Ölführungskanal 25 des Planetenträgers 102 mündet in eine vierte Ringnut 26, die in eine jede der Achsen 107 der Planetenräder 105 eingeschnitten ist. Die vierte Ringnut 26 der jeweiligen Achse 107 steht mit axialen sechsten Ölführungskanälen 27 in Verbindung, die durch die jeweilige Achse 107 hindurchgeführt sind. Die sechsten Ölführungskanäle 27 münden in radiale siebte Ölführungskanäle 28 ein, die offen zwischen den zweiten Planetenradlagern 106 enden.

Mit Hilfe der Ölförderpumpe wird eine definierte Menge an Schmieröl über den Ölzulauf 17 in der Wand des Getriebegehäuses 1 in den ersten Ölführungskanal 18 innerhalb der Buchse 15 eingespeist. Ein erster Ölstrom gelangt über die erste Ringnut 19 der Buchse 15 und der Seitenwange 4 des Planetenträgers 2, die zweiten Ölführungskanäle 20 des Planetenträgers 2 und die dritten, vierten Ölführungskanäle 22, 23 in den Achsen 7 der Planetenräder 5 zu den Planetenradlagern 6 der ersten Planetenstufe. Über die zweite Ringnut 24 in der Buchse 15 und in dem hohlzylindrischen Endabschnitt 12 des Planetenträgers 102, die fünften Ölführungskanäle 25 des Planetenträgers 102 und die sechsten, siebten Ölführungskanäle 27, 28 in der Planetenachse 107 gelangt ein zweiter Ölstrom zu den Planetenradlagern 106 der zweiten Planetenstufe. Damit wird über einen einzigen Stator 14 gleichzeitig den Planetenlagern 6, 106 beider Planetenstufen zwangsweise und kontinuierlich Schmieröl in einer vorbestimmten Menge zugeführt. Die Planetenradlager 6, 106 sind durch die zwangsweise Zufuhr von Schmieröl ständig durchströmt, wodurch die Planetenradlager gleichzeitig geschmiert und durchspült werden. Das aus den Planetenradlagern 6, 106 austretende Schmieröl sammelt sich im Ölsumpf am Boden des Getriebegehäuses 1. Aus dem Ölsumpf saugt die Ölförderpumpe das Schmieröl an und fördert es filtriert und gegebenenfalls gekühlt in das Getriebe zurück.

Die Spalten zwischen der Buchse 15 und dem ersten Planetenträger 2 sowie zwischen der Buchse 15 und dem hohlzylindrischen Endabschnitt 12 des zweiten Planetenträgers 102, die eine definierte Spaltdicke und eine definierte Spaltlänge aufweisen, ermöglichen den Transport des Schmieröls für die Planetenradlager 6, 106 zwischen den rotierenden Planetenträgern 2, 102 und dem nicht rotierenden Getriebegehäuse 1. Abhängig von der Spaltdicke, der Spaltlänge sowie der Viskosität und des anstehenden Druckes des Schmieröles in den ersten, zweiten Ringnuten 19, 24 wird lediglich ein geringer, berechenbarer Prozentsatz der Fördermenge in den Ölsumpf lecken.

## Patentansprüche

1. Planetengetriebe mit einer in einem Getriebegehäuse (1) umlaufenden Planetenstufe für eine mit einem Rotor versehene Windkraftanlage, wobei die Planetenstufe aus einem mit dem Rotor verbundenen Planetenträger (2), der zwei durch Stege miteinander verbundene Seitenwangen (4) aufweist, und aus mehreren über Planetenradlager (6) in dem Planetenträger (2) gelagerten Planetenrädern (5) besteht, die einerseits mit einem zentralen Sonnenrad (9) und andererseits mit einem fest mit dem Getriebegehäuse (1) verbundenen Hohlrad (8) in Eingriff stehen, wobei ein erster Ölführungskanal (18) an dem einen Ende mit einem mit einer Ölförderpumpe in Verbindung stehenden Ölzulauf (17), der durch die Wand des Getriebegehäuses (1) hindurchgeführt ist, und an dem anderen Ende über mehrere durch eine der Seitenwangen (4) des Planetenträgers (2) hindurchgeführte zweite Ölführungskanäle (20) mit durch die Achsen (7) aller Planetenräder (5) hindurchgeführten dritten, vierten Ölführungskanälen (22, 23) in Verbindung steht, die zu den Planetenradlagern (6) hin offen sind, wobei der erste Ölführungskanal (18) eine Einsatzvorrichtung (13) durchdringt, die fest in dem Getriebegehäuse (1) angeordnet ist und einen axialen und einen radialen Abschnitt aufweist, und wobei die zweiten Ölführungskanäle (20) innerhalb der Seitenwange (4) des Planetenträgers (2) von einer ersten Ringnut (19) ausgehen, die in eine radiale Stirnfläche der Seitenwange (4) und in den axialen Abschnitt der Einsatzvorrichtung eingeschnitten ist, und jeweils an der Berührungsfläche zwischen dem Planetenträger (2) und den Achsen (7) der Planetenräder (5) in einer dritten Ringnut (21) enden, die mit den dritten, vierten Ölführungskanälen (22, 23) innerhalb der Achsen (7) aller Planetenräder (5) in Verbindung steht, **dadurch gekennzeichnet, dass** der ersten Planetenstufe eine zweite Planetenstufe mit einem zweiten Planetenträger (102), zweiten Planetenrädern (105) und einer zweiten Sonnenradwelle (109) hinzugefügt ist, dass die Einsatzvorrichtung (13) aus einem radialen Stator (14) mit einer axialen Buchse (15) besteht, die radial zwischen dem ersten Planetenträger (2) und dem zweiten Planetenträger (102) angeordnet ist, dass in die axiale Buchse (15) und in eine radiale Stirnfläche des zweiten Planetenträgers (102) eine zweite Ringnut (24) eingeschnitten ist, dass der zweite Planetenträger (102) von fünften Ölführungskanälen (25) durchdrungen ist, die jeweils in einer vierten Ringnut (26) enden, und dass die vierte Ringnut (26) in eine radiale Stirnfläche der Planetenachsen (107) der zweiten Planetenräder (105) eingeschnitten und mit sechsten, siebten Ölführungskanälen (27, 28) verbunden ist, die durch die zweiten Planetenachsen (107) führen und zu den Planetenradlagern (106) hin offen sind.

2. Planetengetriebe nach Anspruch 1, **dadurch gekennzeichnet, dass** die zweite Ringnut (24) eine Verbindung zu dem ersten Ölführungskanal (18) innerhalb der Buchse (15) aufweist.

3. Planetengetriebe nach Anspruch 1, **dadurch gekennzeichnet, dass** die zweite Ringnut (24) mit den fünften Ölführungskanälen (25) in Verbindung steht, die jeweils aus einem axialen Abschnitt und einem schräg verlaufenden Abschnitt bestehen und durch den zweiten Planetenträger (102) hindurchgeführt sind.

4. Planetengetriebe nach Anspruch 1, **dadurch gekennzeichnet, dass** die sechsten Ölführungskanäle (27) durch die jeweiligen Planetenachsen (107) der Planetenräder (105) axial hindurchgeführt sind und in die siebten Ölführungskanäle (28) radial einmünden, die offen zwischen den zweiten Planetenradlagern (106) enden.

5. Planetengetriebe nach Anspruch 1, **dadurch gekennzeichnet, dass** über die erste Ringnut (19) in der Buchse (15) und in der Seitenwange (4) des Planetenträgers (2), die zweiten Ölführungskanäle (20) des Planetenträgers (2) und die dritten und vierten Ölführungskanäle (22, 23) in den Planetenachsen (7) der Planetenräder (5)zu den Planetenradlagern (6) der ersten Planetenstufe eine Verbindung für einen ersten Ölstrom und über die zweite Ringnut (24) in der Buchse (15) und in dem hohlzylindrischen Endabschnitt (12) des Planetenträgers (102), die fünften Ölführungskanäle (25) des Planetenträgers (102) und die sechsten und siebten Ölführungskanäle (27, 28) in der Planetenachse (107) der Planetenräder (105) zu den Planetenradlagern (106) der zweiten Planetenstufe eine Verbindung für einen zweiten Ölstrom aufgebaut ist.

## Claims

1. Epicyclic gearbox having a planet stage, which revolves in a gearbox housing (1), for a wind power installation which is provided with a rotor, wherein the planet stage comprises a planet support (2) which is connected to the rotor and has two side pieces (4) connected to one another by webs, and a plurality of planet gears (5) which are borne in the planet support (2) via planet gear bearings (6) and engage on the one hand with a central sun gear (9) and on the other hand with a hollow gear (8) which is firmly connected to the gearbox housing (1), wherein a first oil-carrying channel (18) is connected at one end to an oil supply (17), which is connected to an oil feed pump and passes through the wall of the gearbox housing (1) and is connected at the other end via a plurality of second oil-carrying channels (20), which pass through one of the side pieces (4) of the planet support (2) to third and fourth oil-carrying channels (22, 23) which pass through the shafts (7) of all the planet gears (5) and are open to the planet gear bearings (6), wherein the first oil-carrying channel (18) passes through an insertion apparatus (13) which is arranged firmly in the gearbox housing (1) and has an axial and a radial section, and wherein the second oil-carrying channels (20) originate within the side piece (4) of the planet support (2) from a first annular groove (19) which is cut into a radial end surface of the side piece (4) and into the axial section of the insertion apparatus, and each end at the contact surface between the planet support (2) and the shafts (7) of the planet gears (5) in a third annular groove (21), which is connected to the third and fourth oil-carrying channels (22, 23) within the shafts (7) of all the planet gears (5) **characterized in that** the first planet stage has added to it a second planet stage with a second planet support (102), second planet gears (105) and a second sun gear shaft (109), **in that** the insertion apparatus (13) comprises a radial stator (14) with an axial bush (15) which is arranged radially between the first planet support (2) and the second planet support (102), **in that** a second annular groove (24) is cut into the axial bush (15) and into a radial end surface of the second planet support (102), **in that** fifth oil-carrying channels (25) pass through the second planet support (102) and each end in the fourth annular groove (26), and **in that** a fourth annular groove (26) is cut into a radial end surface of the planet shafts (107) of the second planet gears (105) and is connected to sixth and seventh oil-carrying channels (27, 28) which pass through the second planet shafts (107) and are open toward the planet gear bearings (106).

2. Epicyclic gearbox according to Claim 1, **characterized in that** the second annular groove (24) has a connection to the first oil-carrying channel (18) within the bush (15).

3. Epicyclic gearbox according to Claim 1, **characterized in that** the second annular groove (24) is connected to the fifth oil-carrying channels (25), which each comprise an axial section and an obliquely running section, and are passed through the second planet support (102).

4. Epicyclic gearbox according to Claim 1, **characterized in that** the sixth oil-carrying channels (27) pass axially through the respective planet shafts (107) of the planet gears (105) and open radially into the seventh oil-carrying channels (28) which end open between the second planet gear bearings (106).

5. Epicylic gearbox according to Claim 1, **characterized in that**, via the first annular groove (19) in the bush (15) and in the side piece (4) of the planet support (2), the second oil-carrying channels (20) of the planet support (2) and the third and fourth oil-carrying channels (22, 23) in the planet shafts (7) of the planet gears (5) form a connection for a first oil flow to the planet gear bearings (6) of the first planet stage, and, via the second annular groove (24) in the bush (15) and in the hollow-cylindrical end section (12) of the planet support (102) the fifth oil-carrying channels (25) in the planet support (102) and the sixth and seventh oil-carrying channels (27, 28) in the planet shaft (107) of the planet gears (105) form a connection for a second oil flow to the planet gear bearings (106) of the second planet stage.

## Revendications

1. Engrenage épicycloïdal ayant un étage planétaire tournant dans un carter (1) d'engrenage pour une éolienne pourvue d'un rotor, l'étage planétaire étant constitué d'une cage ( 2 ) de transmission planétaire, qui est reliée au rotor et qui a deux flasques ( 4 ) latéraux reliés entre eux par des traverses, et de plusieurs roues (5) satellites montées par des paliers ( 6 ) dans la cage (2) de transmission planétaire, roue ( 5 ) satellite, qui engrènent d'une part avec une roue ( 9 ) solaire centrale et d'autre part avec une roue ( 8 ) à denture intérieure reliée de manière fixe au carter (1) de l'engrenage, un premier canal ( 18 ) de conduite d'huile communiquant à l'une des extrémités avec une arrivée ( 17 ) d'huile qui communique avec une pompe véhiculant l'huile et qui traverse la paroi du carter (1) de l'engrenage et à l'autre extrémité, par plusieurs deuxièmes canaux (20) de conduite de l'huile traversant l'un des flasque ( 4 ) latéral de la cage (2) de transmission planétaire, avec des troisièmes, quatrièmes canaux ( 22, 23 ) de conduite d'huile traversant les axes (7) de toutes les roues (5) satellites, troisièmes et quatrièmes canaux (22, 23) qui sont ouverts vers les paliers ( 6 ) de roues satellites, le premier canal (18) de conduite d'huile traversant un dispositif ( 13 ) rapporté qui est monté fixe dans le carter ( 1 ) de l'engrenage et qui a une partie axiale et une partie radiale et dans lequel les deuxièmes canaux ( 20 ) de conduite d'huile partent, à l'intérieur du flasque ( 4 ) latéral de la cage ( 2 ) de transmission planétaire, d'une première rainure ( 19 ) annulaire, qui est taillée dans une surface frontale radiale du flasque ( 4 ) latéral et dans la partie axiale du dispositif rapporté, et se terminent respectivement à la surface de contact entre la cage (2) de transmission planétaire et les axes ( 7 ) des roues ( 5 ) satellites en une troisième rainure (21) annulaire, qui communique avec les troisième, quatrième canaux ( 22, 23 ) de conduite d'huile à l'intérieur des axes (7) de toutes les roues (5) satellites, **caractérisé en ce qu'**au premier étage planétaire est ajouté un deuxième étage planétaire ayant une deuxième cage ( 102 ) de transmission planétaire, des deuxièmes roues ( 105 ) satellites et un deuxième arbre (109) de roue solaire, **en ce que** le dispositif ( 13 ) rapporté est constitué d'un stator ( 14 ) radial ayant une douille (15) qui est disposée radialement entre la première cage (2) de transmission planétaire et la deuxième cage (102) de transmission planétaire, **en ce qu'**une deuxième rainure ( 24 ) annulaire est taillée dans la douille ( 15 ) axiale et dans une surface frontale radiale de la deuxième cage ( 102 ) de transmission planétaire, **en ce que** la deuxième cage ( 102 ) de transmission planétaire est traversée par des cinquièmes canaux ( 25 ) de conduite d'huile, qui se terminent respectivement dans une quatrième rainure ( 26 ) annulaire, et **en ce que** la quatrième rainure ( 26 ) annulaire est taillée dans une surface frontale radiale des axes ( 107 ) des deuxièmes roues ( 105 ) satellites et est en communication avec des sixièmes, septièmes canaux ( 27, 28 ) de conduite d'huile, qui passent dans les deuxièmes axes ( 107 ) de satellites et sont ouverts vers les paliers ( 106 ) de roues satellites.

2. Engrenage épicycloïdal suivant la revendication 1, **caractérisé en ce que** la deuxième rainure ( 24 ) annulaire a une liaison avec le premier canal ( 18 ) de conduite d'huile à l'intérieur de la douille ( 15 ).

3. Engrenage épicycloïdal suivant la revendication 1, **caractérisé en ce que** la deuxième rainure ( 24 ) annulaire est en communication avec les cinquièmes canaux ( 25 ) de conduite d'huile, qui sont constitués respectivement d'une partie axiale et d'une partie inclinée et qui traversent la deuxième cage ( 102 ) de transmission planétaire.

4. Engrenage épicycloïdal suivant la revendication 1, **caractérisé en ce que** les sixièmes canaux ( 27 ) de conduite d'huile traversent axialement les axes ( 107 ) respectifs des roues ( 105 ) satellites et débouchent radialement dans les septièmes canaux ( 28 ) de conduite d'huile, qui se terminent en s'ouvrant entre les deuxièmes paliers ( 106 ) de roues satellites.

5. Engrenage épicycloïdal suivant la revendication 1, **caractérisé en ce que**, par la première rainure ( 19 ) annulaire dans la douille ( 15 ) et dans le flasque ( 4 ) latéral de la cage ( 2 ) de transmission planétaire, il est ménagé par les deuxièmes canaux ( 20 ) de conduite d'huile de la cage ( 2 ) de transmission planétaire et par les troisièmes et quatrièmes canaux ( 22, 23 ) de conduite d'huile dans les axes ( 7 ) des roues ( 5 ) satellites, vers les paliers ( 6 ) de roues satellites du premier étage planétaire une liaison pour un premier courant d'huile et, par la deuxième rainure ( 24 ) annulaire dans la douille ( 15 ) et dans la partie ( 12 ) d'extrémité en forme de cylindre creux de la cage ( 102 ) de transmission planétaire, par les cinquièmes canaux ( 25 ) de conduite d'huile de la cage ( 102 ) de transmission planétaire et les sixièmes et septièmes canaux ( 27, 28 ) de conduite d'huile dans les axes ( 107 ) des roues ( 105 ) satellites, une liaison vers les paliers ( 106 ) de roues satellites du deuxième étage planétaire pour un deuxième courant d'huile.
